# EUROPÄISCHE PATENTSCHRIFT

(11) **EP 2 240 421 B1**
(45) Veröffentlichungstag und Bekanntmachung des Hinweises auf die Patenterteilung: **20.07.2011**
(21) Anmeldenummer: 09707837.2
(22) Anmeldetag: 06.02.2009
(51) Int. Cl.: C04B 41/65, E01C 5/06, B01J 21/06

(54) **PFLASTERSTEIN SOWIE OBERFLÄCHENBEFESTIGUNG**
PAVING STONE AND SURFACE ATTACHMENT
PAVÉ ET PAVAGE

(30) Priorität: 08.02.2008 DE 202008001836 U
(43) Veröffentlichungstag der Anmeldung: 20.10.2010
(73) Patentinhaber: Boller, Reinhard, 57234 Wilnsdorf (DE)
(72) Erfinder: Boller, Reinhard, 57234 Wilnsdorf (DE)
(74) Vertreter: Haverkamp, Jens
(86) Internationale Anmeldenummer: PCT/EP2009/051405
(87) Internationale Veröffentlichungsnummer: WO 2009/098310

(56) Entgegenhaltungen:
- EP-A- 0 786 283
- DE-A1-102004 027 549
- DE-A1-102005 052 397

## Beschreibung

Die Erfindung betrifft einen Pflasterstein, umfassend einen Tragekörper und eine auf diesem angeordnete Deckschicht aus einem bindemittelgebundenen Füllmaterial, deren Außenseite die Nutzoberfläche des Pflastersteins darstellt, welche Deckschicht einen photokatalytischen Stoff oder ein photokatalytisches Stoffgemisch zum Zersetzen von auf der Nutzoberfläche befindlichen Verunreinigungen enthält. Ferner betrifft die Erfindung eine Oberflächenbefestigung, aufgebaut aus einer Vielzahl verlegter Pflastersteine und zwischen den Pflastersteinen befindlicher Fugen.

Pflastersteine dienen zum Ausbilden von Oberflächenbefestigungen, beispielsweise Wegen, Straßen, Parkplätzen oder dergleichen. Bei den eingesetzten Pflastersteinen handelt es sich zumeist um Betonpflastersteine. Oberflächenbefestigungen sind, da diese typischer Weise zur Schaffung von Verkehrswegen dienen, denen beim Kraftfahrzeugverkehr typischer Weise auftretenden Verschmutzungen ausgesetzt. Diese betrifft sowohl die von den Kraftfahrzeugen emittierten Abgase als auch feste und flüssige Stoffe, wie beispielsweise Rußpartikel, Reifenabtrieb oder Kraftstoff- und Ölverunreinigungen. Um beispielsweise bei Tankstellen Kraftstoff- und Ölverschmutzungen auf der Oberflächenbefestigung nicht in das Grundwasser einzubringen, müssen diese Oberflächenbefestigungen versiegelt sein. Das von diesen Oberflächen abfließende Wasser wird gesondert aufgefangen und einer Reinigung zugeführt.

In EP 0 786 283 A1 ist ein stickoxidzersetzender Betonpflasterstein beschrieben. Mit diesem soll der zunehmenden Stickoxidverschmutzung durch die steigenden Anzahl der am Verkehr teilnehmenden Fahrzeuge, insbesondere der Dieselfahrzeuge entgegen gewirkt werden. Zum Zersetzen des sich auf der Oberfläche des Pflastersteins ablagernden Stickoxids ist in einer Deckschicht des Pflastersteins Titandioxid als Photokatalysator eingebaut. Für die eigentliche Zersetzung sind die an der Oberfläche des Pflastersteins befindlichen TiO₂-Partikel wirksam. Photokatalytisch wirksam ist dieser Photokatalysator bei Vorhandensein von UV-Licht. Da aus diesem Grunde die photokatalytische Aktivität und damit die Stickoxidzersetzung in unschädliche Zersetzungsprodukte nur tagsüber und dann auch nur beim Vorhandensein einer ausreichenden UV-Strahlung möglich ist, verfügt dieser Pflasterstein zusätzlich über einen Stickoxidspeicher zum Speichern von Stickoxid, wenn dieses mangels vorhandener oder nicht ausreichender UV-Strahlung nicht photokatalytisch zersetzt werden kann. Das photokatalytische Titanoxidpulver ist in einer auf einem Tragekörper angeordneten Deckschicht dem als Bindemittel dienenden Zement beigemengt und zwar mit Anteilen von 5 - 50 Gew.-% des Zementes. Als Füllstoff dient bei dieser Deckschicht Sand. Zum Absorbieren von nicht zersetztem Stickoxid wird beispielsweise Zeolith, eingebaut in die Deckschicht, verwendet. Dieser Pflasterstein ist wasserdurchlässig und zwar mit einer Versickerungsrate von zumindest 0,01 cm/sec.

Aus WO 2004/074202 A1 ist ein weiterer Betonpflasterstein bekannt, der prinzipiell aufgebaut ist wie der aus EP 0 786 283 A1 bekannte. Auch der in diesem Dokument beschriebene Pflasterstein ist mit einem TiO₂-basiertem Photokatalysator ausgerüstet. Zum Verbessern der photokatalytischen Wirksamkeit des Titandioxids soll dieses eine Oberfläche von 15 - 350 m²/g aufweisen. Mit dem in diesem Dokument beschriebenen Pflasterstein soll es möglich sein, nicht nur Stickoxide, sondern auch andere organische und anorganische Verschmutzungen abbauen zu können, beispielsweise Aldehyde, Benzole und Schwefeloxide. Auch dieser vorbekannte Pflasterstein weist eine Wasserdurchlässigkeit von wenigsten 0,01 cm/sec auf.

Die Wasserdurchlässigkeit dieser vorbekannten Pflastersteine dient dem Zweck, dass die damit erstellten Oberflächenbefestigungen nicht als versiegelte Oberflächen angesehen werden. Durch die photokatalytische Aktivität der Pflastersteine werden auf deren Nutzoberfläche befindliche Verschmutzungen der vorgenannten Art zersetzt, bevor diese beispielsweise zusammen mit Regenwasser durch den Pflasterstein hindurch in den Untergrund versickern und damit dem Grundwasser zugeführt werden.

In DE 10 2005 052 397 A1 ist eine Füll- oder Bindemasse zur Herstellung einer Trockenmischung eines selbst reinigenden Mörtels beschrieben. Zum Erzielen der Selbstreinigungswirkung wird bei dieser Mischung ebenfalls Titandioxid in einer Anatase-Kristallstruktur mit einer maximalen Korngröße von 0,5 µm und/oder einer mittleren Krongröße im Bereich zwischen 30 nm und 50 nm eingesetzt. Auch dieser Photokatalysator ist UVaktiv und benötigt für seine photokatalytische Wirksamkeit eine Wellenlänge von 380 nm bis 410 nm.

Die vorbeschriebenen Pflastersteine, gleiches gilt auch für die vorbeschriebene Fugen- oder Bindemasse vermögen zwar auf der Oberfläche der Pflastersteine befindliche Verschmutzungen der vorgenannten Art in als unschädlich angesehene Zersetzungsprodukte abzubauen. Es hat sich jedoch gezeigt, dass die Wirksamkeit des Selbstreinigungseffektes nicht ausreichend ist, damit, vor allem bei Vorliegen ungünstiger UV-Lichtverhältnisse der Zersetzungsprozess ausreichend rasch abläuft, damit gewährleistet werden kann, dass, wenn überhaupt, nur ein sehr geringer Anteil nicht abgebauter Verschmutzungen im Falle eines Regengusses in das Grundwasser eingebracht wird.

Der Erfindung liegt daher die Aufgabe zugrunde, einen Eingangs genannten Pflasterstein sowie eine durch Verwenden einer Vielzahl derartiger Pflastersteine erstellte Oberflächenbefestigung mit einer verbesserten Selbstreinigungswirkung vorzuschlagen.

Diese Aufgabe wird erfindungsgemäß durch einen eingangs genannten, gattungsgemäßen Pflasterstein gelöst, bei dem das Bindemittel der Deckschicht zumindest in ihrem nutzoberflächennahen Randbereich durch einlagerung von Nanopartikeln flüssigkeitsundurchlässig ausgebildet ist und zumindest ein Teil der Nanopartikel aus dem photokatalytischen. Stoff oder dem photokatalytischen Stoffgemisch besteht.

Zum Ausbilden einer versickerungsfähigen Oberflächenbefestigung wird die vorgenannte Aufgabe gelöst, indem die Pflastersteine flüssigkeitsundurchlässig ausgebildet sind, da das Bindemittel der Deckschicht der Pflastersteine zumindest in ihrem jeweiligen nutzoberflächennahen Randbereich durch Einlagerung von Nanopartikeln diese Eigenschaft erhalten haben, und zumindest ein Teil der Nanopartikel aus dem photokatalytischen Stoff oder dem photokatalytischen Stoffgemisch bestehen.

Bei dieser Oberflächenbefestigung ist vorgesehen, dass die Versickerung beispielsweise über die zwischen den Pflastersteinen befindlichen Fugen erfolgt. Selbstverständlich kann eine Versickerung von abfließendem Oberflächenwasser auch ganz oder teilweise neben der Oberflächenbefestigung erfolgen. Dies gestattet es, die Fugen ebenfalls wasserundurchlässig auszugestalten, falls dieses gewünscht ist. Gleichfalls kann vorgesehen sein, das von der Oberflächenbefestigung abfließende Oberflächenwasser aufzufangen und einer weiteren Verwendung, beispielsweise als Betriebswasser zuzuführen. Die Pflastersteine einer der vorgenannten Oberflächenbefestigungen selbst sind hingegen flüssigkeitsundurchlässig. Das Ausbilden derartiger Pflastersteine hat zum Vorteil, dass darauf befindliche Verschmutzungen nicht in die Deckschicht des Pflastersteins eindringen können, sondern an der Oberfläche in Kontakt mit dem eingesetzten Photokatalysator verbleiben bis die Zersetzungsprodukte abgewaschen werden. Durch diese Maßnahme ist vermieden, dass nicht zersetzte Verschmutzungen unkontrolliert in den Pflasterstein eindringen und beispielsweise mit Regenwasser vermengt im Zuge der Versickerung dem Grundwasser zugeführt werden. Damit ist bereits die längere Verweildauer der Verschmutzung auf der lichtausgesetzten Nutzoberfläche des Pflastersteins ein Grund für die verbesserte selbstreinigende Wirkung desselben. Die Flüssigkeitsundurchlässigkeit der Deckschicht des Pflastersteins wird durch Einlagerung von Nanopartikeln in das Bindemittel der Deckschicht erreicht. Zumindest ein Teil der Nanopartikel, vorzugsweise die gesamte zum Erzielen der Flüssigkeitsundurchlässigkeit dem Bindemittel, beispielsweise dem Zement beigemengte Nanopartikelmenge besteht aus dem für die Selbstreinigung eingesetzten photokatalytischen Stoff oder dem photokatalytischen Stoffgemisch.

Der Einbau der Nanopartikel in das Bindemittel der Deckschicht führt zu der gewünschten Flüssigkeitsundurchlässigkeit unmittelbar an der Nutzoberfläche. Dieses hat zum Vorteil, dass Verschmutzungen zwar in unmittelbarem Kontakt mit den Nanopartikeln und damit mit dem Photokatalysator stehen, jedoch nicht in die Poren eindringen und damit in Bereiche der Deckschicht gelangen, in die kein Licht eindringt und eine photokatalytische Zersetzung der Verschmutzung nicht stattfinden kann. Der Einbau der Nanopartikel in die gesamte Deckschicht dient dem Zweck, dass durch Abnutzung oder durch Abplatzen von Deckschichtteilen auch die dann freigelegten Deckschichtbereiche auch die gewünschte photokatalytische Wirkung entfalten.

Durch den Einsatz von Nanopartikeln zum Erzielen der gewünschten Flüssigkeitsundurchlässigkeit der Deckschicht des Pflastersteins wird die natürliche Oberflächenrauhigkeit der Deckschicht, typischer Weise einem zementgebundenen Sand nicht, zumindest nicht merklich herabgesetzt. Da ein Teil der Nanopartikel, vorzugsweise der gesamte Anteil der Nanopartikel aus dem photokatalytischen Stoff oder Stoffgemisch besteht, sind diese mit großer Oberfläche über die gesamt Nutzoberfläche der Deckschicht des Pflastersteins verteilt. Auch dieses begründet die bessere photokatalytische Wirksamkeit zum Zersetzen von auf der Nutzoberfläche befindlichen Verunreinigungen dieses Pflastersteins sowie der aus derartigen Pflastersteinen aufgebauten Oberflächenbefestigung.

Der Einbau der Nanopartikel zumindest in dem oberflächennahen Randbereich der Deckschicht hat ferner zum Vorteil, dass hierdurch der Kontaktwinkel von sich auf der Nutzoberfläche anlagernden Flüssigkeitstropfen gegenüber der Nutzoberfläche herabgesetzt ist. Infolge dieser Eigenschaft der Nutzoberfläche, die Wechselwirkung zwischen der Flüssigkeit und der Nutzoberfläche zu erhöhen und dadurch die Benetzbarkeit der Oberfläche zu steigern, breitet sich ein Flüssigkeitstropfen über eine entsprechend größere Oberfläche der Nutzoberfläche aus. Gleichzeitig wird die Tropfendicke einer Verschmutzung, beispielsweise eines Öltropfens reduziert. Die vorgeschriebene Eigenschaft ist insbesondere ausgebildet, damit flüssige, vor allem ölhaltige Verschmutzungen sich dergestalt verhalten. Das Ausbreiten des Flüssigkeitstropfens über die Nutzoberfläche des Pflastersteins bringt eine größere Menge desselben in unmittelbaren Kontakt mit dem Photokatalysator. Das durch diese Maßnahme bedingte Verringern der Dicke der Verschmutzung gewährleistet auch bei gefärbten Flüssigkeiten, wie beispielsweise Ölen, dass die unterhalb der Verschmutzung befindlichen photokatalytischen Partikel noch hinreichend lichtbeaufschlagt sind, damit die photokatalytische Zersetzung ablaufen kann. Eine Zersetzung kann sodann weitestgehend über die gesamte Fläche des Flüssigkeitstropfens stattfinden. Auch dieses begründet die gesteigerte Wirksamkeit des vorgeschriebenen Pflastersteins. Die vorbeschriebene Eigenschaft der Flüssigkeitsausbreitung auf der Oberfläche der Deckschicht und die Flüssigkeitsundurchlässigkeit derselben hat ferner zum Vorteil, dass der Pflasterstein rascher trocknet.

Das flüssigkeitsundurchlässige Ausgestalten des Pflastersteins hat ferner zur Folge, dass dieser gegenüber herkömmlichen, auch mit einem Photokatalysator dotierten Pflastersteinen hinsichtlich seiner Resistenz gegenüber Bewuchs verbessert ist. Dieses vor allem darin begründet, dass der vorbeschriebene Pflasterstein mangels Wasserdurchlässigkeit keinen einen Bewuchs unterstützenden Wasserspeicher darstellt.

Gemäß einem bevorzugten Ausführungsbeispiel verfügt die Deckschicht des Pflastersteins über einen Photokatalysator, dessen photokatalytische Aktivität vor allem im sichtbaren Licht erfolgt, da dann der katalytische Zersetzungsprozess im maßgeblichen Umfange von dem Vorhandensein von UV-Strahlung unabhängig ist. Somit läuft bei diesem Pflasterstein die photokatalytische Reinigungswirkung ab, sobald die Nutzoberfläche desselben sichtbarem Licht ausgesetzt ist. Damit ist eine Selbstreinigung nicht nur auf die Zeit begrenzt, wenn natürliches sichtbares Licht zur Verfügung steht, sondern kann auch ablaufen, wenn die Nutzoberfläche des Pflastersteins bzw. der aus solchen gebildeten Oberflächenbefestigung beleuchtet ist. Daher können diese Pflastersteine auch in beleuchteten Tunneln eingesetzt werden. Tagsüber stark frequentierte Oberflächenbefestigungen, wie beispielsweise stark belegte oder frequentierte Parkplätze können im Zuge einer nächtlichen Beleuchtung zur Selbstreinigung angeregt werden.

Infolge der photokatalytischen Dotierung der Deckschicht mit einem Photokatalysator an seiner Nutzoberfläche können zahlreiche organische Verschmutzungen an dieser im Zuge des Selbstreinigungsprozesses zersetzt und damit abgebaut werden. Dieses gilt gleichermaßen auch für tierische oder auch pflanzliche organische Verschmutzungen.

Als im sichtbaren Licht hochwirksamer Photokatalysator ist bevorzugt ein kohlenstoffmodifizierter Titandioxid Photokatalysator eingesetzt, wie dieser in DE 10 2004 027 549 A1 beschrieben ist. Durch diese explizite Bezugnahme auf DE 10 2004 027 549 A1 ist die Offenbarung dieses Dokumentes und die darin vorhandene Beschreibung des Titandioxid-Photokatalysators zum Gegenstand dieser Ausführungen gemacht.

Zum Erzielen eines hinreichenden Selbstreinigungsergebnisses wird es als ausreichend angesehen, wenn von dem in DE 10 2004 027 549 A1 beschrieben Titandioxid-Photokatalysator ein Anteil von 1 bis 10 Gew.-%, insbesondere 4 bis 8 Gew.-% des Bindemittelanteils des zum Ausbilden der Deckschicht eingesetzten Bindemittels verwendet wird, wobei das Titandioxid vorzugsweise eine Korngröße zwischen 5 und 80 nm, insbesondere 10 bis 30 nm aufweist und diese Nanopartikel homogen in dem Bindemittel verteilt sind. Höherer Gehalte dieses Titandioxid-Photokatalysators sind möglich, verteuern jedoch die Herstellung des Pflastersteins.

Grundsätzlich können der Tragekörper und die Deckschicht des Pflastersteins aus mineralischen oder auch nichtmineralischen Baustoffen bestehen. In aller Regel wird man den Pflasterstein jedoch aus mineralischen Bestandteilen herstellen. Bei einer solchen Ausgestaltung besteht der Tragekörper aus Beton; bei der Deckschicht handelt es sich dann um einen so genannten Vorsatzbeton. Der im Rahmen dieser Ausführungen benutzte Begriff "Füllstoff" bzw. "Füllstoffanteil" bezieht sich bei einer Ausgestaltung des Pflastersteins aus Beton auf den Betonzuschlag, der Gesteinskörner, wie beispielsweise Sand, Kies oder Split. Den Tragekörper wird man typischerweise aus einem für herkömmliche Pflastersteine eingesetzten Beton herstellen. Bezüglich des Vorsatzbetons ist gemäß einem Ausführungsbeispiel zum Erzielen einer homogenen Nutzoberfläche in dem Vorsatzbeton die Größe der Betonzuschlagstoffe gegenüber der Größe derselben in dem Tragekörper reduziert. Dieses erfolgt vor dem Hintergrund einer Vermeidung von durch größere Zuschlagstoffpartikel auf der Nutzoberfläche erzeugte, nicht photokatalytisch wirksame Inseln, da der Photokatalysator in dem Bindemittel enthalten ist. Als Bindemittel selbst wird Zement, gegebenenfalls mit einem Zusatzstoff oder Zusatzmittel eingesetzt.

In einem Ausführungsbeispiel ist vorgesehen, als Füllmaterial der Deckschicht einen Feinsand mit einer Korngröße von maximal 0,2 mm, insbesondere von maximal 0,15 mm einzusetzen. Es hat sich gezeigt, dass mit einem solchen Füllmaterial eine hinreichende Tragfestigkeit der Deckschicht ausgebildet werden kann und gleichzeitig der Bindemittelanteil an der Nutzoberfläche über die Nutzoberfläche gesehen hinreichend homogen verteilt ist. Erreicht werden soll durch eine solche Maßnahme, dass auf der Nutzoberfläche Flächenanteile, in denen kein Photokatalysator vorhanden ist - Füllmaterial- bzw. Füllkorninseln - möglichst klein sind.

Zweckmäßig ist die Ausgestaltung eines Pflastersteins, dessen Nanopartikel enthaltende Deckschicht dergestalt ausgebildet ist, dass an seiner Nutzoberfläche der Füllstoffanteil gegenüber dem Bindemittelanteil reduziert ist. Erreicht wird hierdurch, dass die in Kontakt mit der Umwelt befindliche Oberfläche vorzugsweise weitestgehend aus Bindemittelanteilen mit dem darin enthaltenen Photokatalysator oder Photokatalysatorgemisch besteht und aus diesem Grunde die Reinigungsaktivität dieses Pflastersteins verbessert ist. Erreicht werden kann dieses im Wege der Herstellung des Pflastersteins bzw. seiner Deckschicht durch Einstellen einer hinsichtlich des Füllmaterials ausgehend von der Nutzoberfläche zum Tragekörper hin gradierten Körnung, wobei diese in Richtung zum Tragekörper hin zunimmt. Um die gewünschte Tragfähigkeit des Pflastersteins und seiner Deckschicht nicht zu beeinträchtigen, ist es erforderlich, dass auch die Deckschicht einen bestimmten Füllmaterialanteil aufweist. Durch Einstellen der Feuchtigkeit des zur Ausbildung der Deckschicht eingesetzten Bindemittels beim Auftragen desselben auf den Tragekörper bei der Herstellung des Pflastersteins und durch einen mit entsprechender Energie ausgeführten Rüttelprozess kann dieses gewünschte Ergebnis erzielt werden. Im Zuge eines solchen Rüttelns werden Luftblasen aus der noch nicht abgebundenen Deckschicht ausgetrieben, größere Füllmaterialkörner sinken ab und es sammelt sich an der Nutzoberfläche nach Art eines Überzuges Bindemittel mit dem darin enthaltenen Nanopartikeln an. Anstelle eines Rüttelns oder auch zum Unterstützen eines solchen Rüttelprozesses besteht ebenfalls die Möglichkeit, auf die Nutzoberfläche der noch nicht abgebundenen Deckschichtmasse mechanisch einzuwirken, um die zuoberst liegenden und gegebenenfalls aus dem Bindemittel herausragenden Füllmaterialkörner in das Bindemittel einzudrücken.

Der Einbau der Nanopartikel in hinreichender Menge hat die bestimmungsgemäße Wasserundurchlässigkeit zur Folge. Vorzugsweise ist das Bindemittel derart eingestellt, dass die Deckschicht zwar wasserundurchlässig, jedoch gasdurchlässig, so dass ein Gasaustausch zwischen dem Untergrund und der oberhalb der Nutzoberfläche des Pflastersteins befindlichen Umgebungsluft stattfinden kann. Bei einem Einsatz von einem TiO₂-Katalysator wird durch die vorgesehene Gasdurchlässigkeit der Deckschicht des Pflastersteins oder auch seines Tragekörpers gewährleistet, dass die Photokatalysatorpartikel zumindest weitestgehend auch bei auf der Oberfläche der Deckschicht befindlicher Verschmutzung Luftkontakt haben, und zwar über die Gasdurchlässigkeit der Deckschicht. Über die Nutzoberfläche kann, da diese durch die Verschmutzung bedeckt ist, keine Luft an die Katalysatorpartikel herantreten. Der Kontakt der Katalysatorpartikel mit Luft ist möglichst ununterbrochen oder nur durch kurze Zeitabstände unterbrochen gewünscht, um den photokatalytischen Kreisprozess aufrechtzuerhalten. Auch dieses ist ein Grund für die verbesserte Wirksamkeit des beschriebenen Pflastersteins. Bei vorbekannten wasserundurchlässigen Pflastersteinen mit einem in die Deckschicht eingebauten Photokatalysator erfolgt eine Zersetzung einer Verschmutzung maßgeblich vom Rand derselben ausgehend. Bei dem beschriebenen Pflasterstein erfolgt dagegen eine Zersetzung der Verschmutzung über die gesamte Fläche der Verschmutzung oder zumindest im Wesentlichen über die gesamte Fläche derselben.

Bevorzugt wird ein Photokatalysator eingesetzt, der keine oder allenfalls nur eine geringfügige Pigmenteigenschaft aufweist. Bei Einsatz eines solchen Photokatalysators bleibt die natürliche Farbe des Pflastersteins erhalten. Farbig gestaltete Pflastersteine werden somit durch das Einbringen eines solchen Photokatalysators nicht beeinträchtigt.

Nachfolgend ist die Erfindung anhand von Ausführungsbeispielen unter Bezugnahme auf die beigefügten Figuren beschrieben. Es zeigen:
- **Fig. 1:**: Eine schematisierte Seitenansicht eines Pflastersteins,
- **Fig. 2:**: eine Draufsicht auf die oberseitige Nutzoberfläche des Pflas- tersteins der Figur 1,
- **Fig. 3, 3a:**: eine Draufsicht auf den Pflasterstein der Figur 1, darstellend die Verteilung eines darauf aufgebrachten Öltropfens (Figur 3) sowie in einer schematisierten Querschnittsdarstellung (Figur 3a),
- **Fig. 4, 4a:**: eine Darstellung entsprechend derjenigen der Figur 3, je- doch mit einem auf einen herkömmlichen Pflasterstein auf- gebrachten Öltropfen (Figur 4) sowie in einer schematisier- ten Querschnittsdarstellung (Figur 4a) und

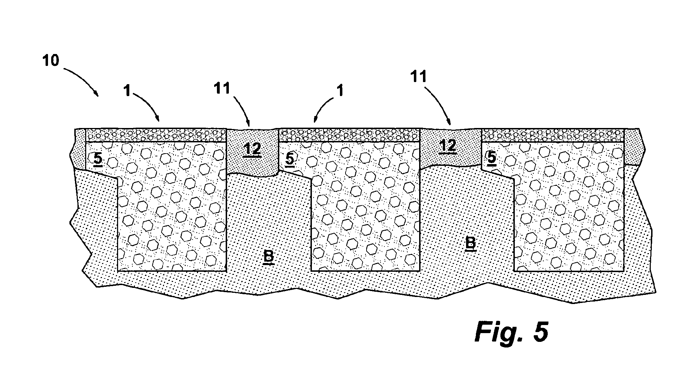

- **Fig. 5:**: einen Ausschnitt einer Oberflächenbefestigung, aufgebaut aus einer Vielzahl von Pflastersteinen gemäß Figur 1.

Ein Pflasterstein 1 ist als Betonformstein konzipiert. Der Pflasterstein 1 umfasst einen unteren, aus Beton hergestellten Tragekörper 2. Der Tragekörper 2 ist oberseitig mit einer Deckschicht 3 - einem Vorsatzbeton - versehen, deren oberer Abschluss die Nutzoberfläche 4 des Pflastersteins 1 bildet.

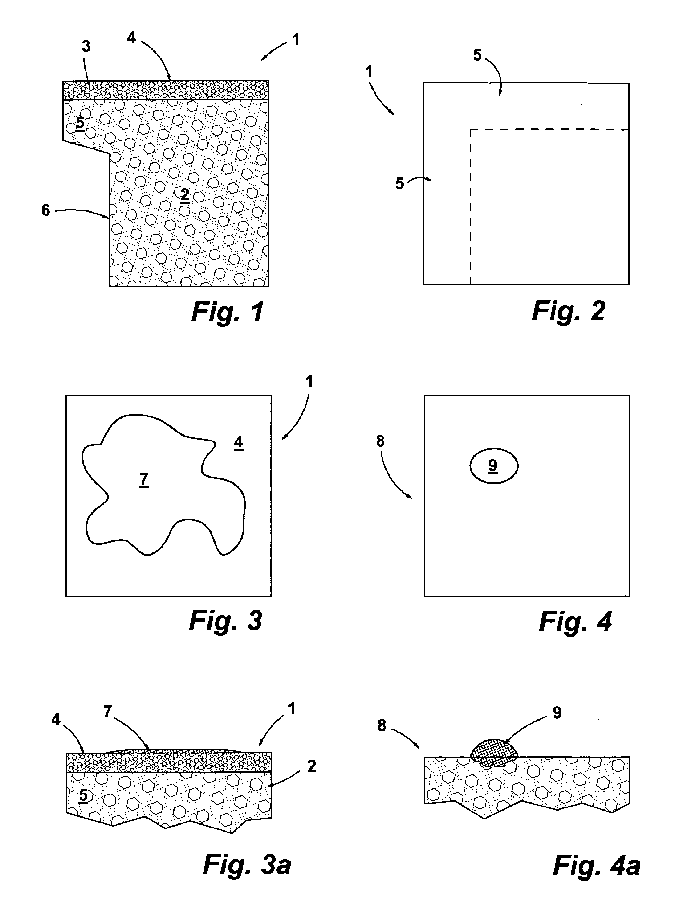

Der Tragekörper 2 verfügt über einen auf zwei, die Nutzoberfläche 4 begrenzende Seitenflächen beschränkte Überstände 5, die gegenüber der unteren Grundfläche des Tragekörpers 1 vorspringen. Der Übergang der Überstände 5 in die diesbezügliche Seitenfläche 6 ist, wie in Figur 1 erkennbar, geneigt ausgebildet. Aus der Draufsicht der Figur 2 auf den Pflasterstein 1 sind gestrichelt die Begrenzungen der Überstände 5 erkennbar.

Bei der Deckschicht 3 handelt es sich um eine zementgebundene Schicht mit Quarzsand als Füllmaterial. In den als Bindenmittel dienenden Zement ist mit einem Anteil von etwa 6 Gew.-% am Zementanteil der Deckschicht 3 ein kohlenstoffhaltiger, im sichtbaren Licht hochwirksamer Titandioxid-Photokatalysator in einer mit einer mittleren Korngröße von 15 nm enthalten. Bei dem eingesetzten Photokatalysator handelt es sich um einen solchen, wie dieser in DE 10 2004 027 549 A1 als Erfindung beschrieben ist. Dieser Photokatalysator ist innerhalb der Deckschicht 3 homogen verteilt. Der Einbau dieser photokatalytischen Nanopartikel hat zur Folge, dass die Deckschicht 3 des Pflastersteins 1 wasserundurchlässig ist. Die homogene Verteilung dieser photokatalytisch hochwirksamen Nanopartikel innerhalb der gesamten Deckschicht 3 hat zum Vorteil, dass durch eine Beschädigung der Nutzoberfläche 4 der Deckschicht 3, beispielsweise durch Abplatzens eines Stücks der Deckschicht 3 weder die photokatalytische Wirkung noch die gewünschte Flüssigkeitsundurchlässigkeit der Deckschicht 3 beeinträchtigt ist. Je nach vorgesehener Verwendung des Pflastersteins 1 wird man die Dicke der Deckschicht 3 unterschiedlich dick vorsehen. Die Dicke der Deckschicht 3 kann mit 1 - 2 cm vorgesehen sein. Insbesondere bei Ausbilden einer Deckschicht mit einem feinkörnigen Füllmaterial, beispielsweise Feinsand mit einer maximalen Korngröße von 0,2 mm kann zum Reduzieren der Menge der eingesetzten photokatalytischen Nanopartikel die Deckschicht auch dünner ausgebildet sein. Bei einer solchen Ausgestaltung sind Deckschichten mit einer Stärke von 5 bis 7 mm möglich.

Durch Einbau der vorgenannten, auch bei sichtbarem Licht photokatalytisch hochwirksamen Nanopartikel weist die Nutzoberfläche 4 der Deckschicht 3 eine Oberflächeneigenschaft auf, dass darauf auftreffende Flüssigkeit, insbesondere ölhaltige Flüssigkeit bestrebt ist, einen großen Oberflächenkontakt zu der Nutzoberfläche 4 einzunehmen, wie dieses in Figuren 3, 3a schematisiert anhand des ölhaltigen Flüssigkeitstropfens 7 dargestellt ist. Der Kontaktwinkel der Flüssigkeit mit der Nutzoberfläche 4 ist sehr klein und kann weniger als 5° betragen. Die Folge ist, dass die Dicke des Flüssigkeitstropfens 7 aufgrund seiner großflächigen Verteilung nur sehr gering ist. Dieses wiederum bedingt, dass ein großer Anteil des Flüssigkeitstropfens in unmittelbaren Kontakt mit der Nutzoberfläche 4 und den darin enthaltenden Photokatalysatoren steht, was wiederum die Zersetzung des Öltropfens 7 beschleunigt, da wegen der geringen Tropfendicke Licht durch diesen hindurch die an der Nutzoberfläche 4 frei liegenden Photokatalysatoren als Grundvoraussetzung zum Entfalten ihrer photokatalytischen Aktivität beaufschlagt. Zum Aufrechterhalten des photokatalytischen Kreisprozesses des als Photokatalysator eingesetzten Titandioxids dient die Gasdurchlässigkeit der Deckschicht 3, wodurch die an der Nutzoberfläche 4 befindlichen Photokatalysatoren in Luftkontakt sind.-Der Einbau der Nanopartikel, wobei von diesen zumindest ein Teil, vorzugsweise der gesamte Anteil photokatalytisch aktiv ist, bedingt nicht nur die Wasserundurchlässigkeit des Pflastersteins 1 und verbessert dadurch den Selbstreinigungseffekt, sondern verstärkt diesen zudem durch die der Nutzoberfläche 4 durch Einbau der Nanopartikel verliehenen hydrophilen Eigenschaft, wie vorstehend beschrieben.

Zum Vergleich ist in Figuren 4, 4a ein auf einem herkömmlichen Pflasterstein 8 aufgebrachter Flüssigkeitstropfen 9 derselben Flüssigkeit und derselben Flüssigkeitsmenge dargestellt. Der Kontaktwinkel des Flüssigkeitstropfens 9 mit der Oberfläche des Pflastersteins 8 ist sehr viel größer mit der Folge, dass der Flüssigkeitstropfen 9 eine entsprechend größere Dicke aufweist. Darüber hinaus macht der Vergleich der Figuren 3, 3a mit 4, 4a deutlich, dass bei einer Benetzung der Oberfläche des herkömmlichen Pflastersteins 8 der darauf befindliche Tropfen 9 in den Pflasterstein 8 eindringt. Aufgrund seiner Wasserundurchlässigkeit dringt von dem Tropfen 7 bei dem Pflasterstein 1 keine Flüssigkeit in die Deckschicht 3 ein.

Die Deckschicht 3 des Pflastersteins 1 ist aufgrund der Eigenschaften des als Nanopartikel eingesetzten Photokatalysators, wie vorstehend beschrieben, wasserundurchlässig. Gleichwohl ist die Deckschicht 3 durch die photokatalytischen Nanopartikel nicht versiegelt und bleibt damit gasdurchlässig.

Die photokatalytischen Nanopartikel sind in dem Bindemittel der Deckschicht 3 möglichst gleichmäßig verteilt. Um ein Verklumpen beim Einbringen der Nanopartikel in die angerührte Bindemittelmasse zu vermeiden und/oder um den Mischvorgang in möglichst kurzer Zeit ausführen zu können, kann vorgesehen sein, den Photokatalysator zunächst in eine Schlämme zu bringen und sodann in diese das Bindemittel einzubringen. Um die Mischzeit zu reduzieren, kann ein Einbringen einer solchen Nanopartikelschlämme in das in einer Mischtrommel befindliche Bindemittel durch Einsprühen erfolgen. Möglich ist es auch, Stabilisatoren, beispielsweise Emulgatoren vorzusehen, um den Mischprozess der Nanopartikel im Hinblick auf eine möglichst gleichmäßige Verteilung dieser Partikel in dem Bindemittel einzusetzen.

Zum Ausbilden einer Oberflächenbefestigung 10 werden eine Vielzahl von Pflastersteinen 1 unter Belassung eines bestimmten Fugenabstandes 11 voneinander in eine Bettung B, typischer Weise eine Kiessandbettung eingesetzt. Der Bereich unter den Überständen 5 zwischen zwei benachbart zueinander angeordneten Pflastersteinen 1 kann, wie in Figur 1 dargestellt, ebenfalls mit dem Material der Bettung B verfüllt sein. Nach Aufsetzten der Pflastersteine 1 auf die Bettung B kann das zwischen die Pflastersteine 1 befindliche Bettungsmaterial durch die zunächst noch oberseitig offenen Fugen 11 unter die Überstände 5 und zwischen die Pflastersteine 1 eingebracht werden. Die eigentlichen, zwischen einem Überstand 5 des einen Pflastersteins 1 und der gegenüberliegenden Seite des benachbart angeordneten Pflastersteins 1 befindliche Fuge 11 ist bei dem dargestellten Ausführungsbeispiel mit einem Fugenfüllmaterial 12 verfüllt. Als Fugenfüllmaterial 12 wird Material-Mischung eingesetzt, die nach ihrem Einbau wasserdurchlässig ist. Eingebaut in das Fugenfüllmaterial 12 ist ebenfalls ein Titanoxid als Photokatalysator. Die Fugen 11 bzw. das Fugenfüllmaterial 12 sind im Gegensatz zu der Deckschicht 3 der Pflastersteine 1 wasserdurchlässig. Daher dienen die Fugen 11 dem Zweck, wenigstens einen Teil des von den Pflastersteinen 1 abfließenden Oberflächenwassers einer Versickerung zuzuführen. Aus diesem Grunde ist die Wasserdurchlässigkeit der Fugen 11 bzw. des Fugenfüllmaterials 12 auf die durchschnittliche zu erwartende abfließende Wassermenge des bzw. der angrenzenden Pflastersteine 1 abgestimmt. Die Wasserdurchlässigkeit bzw. Porosität der Bettung B ist deutlich höher als die Wasserdurchlässigkeit des Fugenfüllmaterials 12. Dieses und die unterhalb der Überstände größere zur Verfügung stehende Versickerungsfläche erlauben ein rasches Abfließen des durch die Fugen 11 hindurch tretenden Wassers. Nicht von den Fugen 11 aufgenommenes abfließendes Wasser versickert sodann neben der Oberflächenbefestigung 10. Da die auf den Nutzoberflächen 4 der Pflastersteine 1 befindlichen Verunreinigungen infolge ihrer hohe photokatalytischen Wirksamkeit in kurzer Zeit zersetzt sind, besteht nicht die Gefahr, dass wesentliche Verunreinigungen mit abfließenden Wasser im Wege einer Versickerung dem Grundwasser zugeführt werden.

Wenn durch Einsatz von TiO₂ als Photokatalysator ein durch seine weiße Pigmenteigenschaft bedingte Aufhellung einer ansonsten andersfarbigen Deckschicht nicht gewünscht ist, können Farbpigmente beigemengt werden. Ebenfalls ist es möglich einen Titandioxidkatalysator in Form der beschriebenen Nanopartikel in modifizierter Form einzusetzen, und zwar in einer Form, in der dieses keine oder nur geringe Pigmenteigenschaften aufweist. Dieses ermöglicht die Ausbildung quasi beliebig farbiger Deckschichten.

Die Erfindung ist vorstehend im Wege eines Beispieles beschrieben worden. Anstelle des Einsatzes eines einzigen Photokatalysators, kann etwa zur Ausnutzung unterschiedlicher Lichtwellenlängen auch vorgesehen sein, eine Mischung von zwei oder mehreren Photokatalysatoren in die Deckschicht vorzugsweise als Nanopartikel einzubauen. Somit könnte die in den Figuren beschriebene Deckschicht mit dem darin enthaltenden Photokatalysator um einen oder mehrere weitere Photokatalysatoren ergänzt werden, die eine Wirksamkeit in einem anderen Lichtwellenspektrum, beispielsweise bei UV-Licht eine hohe photokatalytische Wirksamkeit entfaltet. Die Auswahl der unterschiedlichen Photokatalysatoren bei einer solchen Ausgestaltung kann auch unter Wirtschaftlichkeitsgesichtspunkten erfolgen. Je nach Einsatzgebiet des Pflastersteins wird man diejenige Photokatalysatorzusammenstellung in die Deckschicht des Pflastersteins einbauen, die den zu erwartenden Umgebungsbedingungen und Verschmutzungsbedingungen am besten angepasst sind. Gleichfalls kann das Vorsehen von Photokatalysatormischungen dem Zweck dienen, eine größere Palette an Verschmutzungen zersetzen zu können, wenn unterschiedliche Photokatalysatoren zum Zersetzen unterschiedlicher Verschmutzungen besser geeignet sein sollten.

Die Verwendung von Quarzsand als Füllmaterial in der Deckschicht 3 ist lediglich beispielhaft zu verstehen. Anstelle von Quarzsand können auch andere Füllmaterialien dienen, wie beispielsweise Kies, Splitt oder sonstige Partikel, auch nichtmineralische.

In den Figuren ist beispielhaft ein Pflasterstein mit einer bestimmten Geometrie beschrieben worden. Die zu diesen Pflastersteinen beschriebenen Ausführungen gelten gleichermaßen für Pflastersteine gleich welcher Art und welcher Geometrie, somit auch für seitlich gekammerte Pflastersteine, quaderförmige Pflastersteine und dergleichen.

Auch wenn in den Figuren eine Oberflächenbefestigung beschrieben ist, die wasserdurchlässige Fugen aufweist, versteht es sich von selbst, dass mit den beschriebenen Pflastersteinen auch andere Oberflächenbefestigungen bereitgestellt werden können, beispielsweise fugenlos verlegte Pflastersteine oder solche mit versiegelten Fugen.

### Bezugszeichenliste

- 1: Pflasterstein
- 2: Tragekörper
- 3: Deckschicht
- 4: Nutzoberfläche
- 5: Überstand
- 6: Seitenfläche
- 7: Flüssigkeitstropfen
- 8: Pflasterstein
- 9: Flüssigkeitstropfen
- 10: Oberflächenbefestigung
- 11: Fuge
- 12: Fugenfüllmaterial
- B: Bettung

## Patentansprüche

1. Pflasterstein, umfassend einen Tragekörper (2) und eine auf diesem angeordnete Deckschicht (3) aus einem bindemittelgebundenen Füllmaterial, deren Außenseite die Nutzoberfläche (4) des Pflastersteins (1) darstellt, welche Deckschicht (3) einen photokatalytischen Stoff oder ein photokatalytisches Stoffgemisch zum Zersetzen von auf der Nutzoberfläche (4) befindlichen Verunreinigungen enthält, **dadurch gekennzeichnet, dass** das Bindemittel der Deckschicht (3) zumindest in ihrem nutzoberflächennahen Randbereich durch Einlagerung von Nanopartikeln flüssigkeitsundurchlässig ausgebildet ist und zumindest ein Teil der Nanopartikel aus dem photokatalytischen Stoff oder dem photokatalytischen Stoffgemisch besteht.

2. Pflasterstein nach Anspruch 1, **dadurch gekennzeichnet, dass** die zum Abdichten der Deckschicht (3) eingesetzten Nanopartikel sämtlich aus dem photokatalytischen Stoff oder Stoffgemisch bestehen.

3. Pflasterstein nach einem der Ansprüche 1 oder 2, **dadurch gekennzeichnet, dass** die Deckschicht (3) hinsichtlich ihrer Zusammensetzung über ihre Dicke hin homogen zusammengesetzt ist.

4. Pflasterstein nach einem der Ansprüche 1 oder 2, **dadurch gekennzeichnet, dass** die Deckschicht an ihrer Nutzoberfläche einen gegenüber dem den photokatalytischen Stoff oder das photokatalytische Stoffgemisch enthaltende Bindemittel reduzierten Füllstoffanteil aufweist.

5. Pflasterstein nach einem der Ansprüche 1 bis 4, **dadurch gekennzeichnet, dass** das Füllmaterial der Deckschicht Feinsand mit einer maximalen Korngröße von 0,2 mm, insbesondere von maximal 0,15 mm ist.

6. Pflasterstein nach einem der Ansprüche 1 bis 5, **dadurch gekennzeichnet, dass** der in der Deckschicht (3) eingelagerte photokatalytische Stoff ein im sichtbaren Licht aktiver Photokatalysator auf der Basis eines mit Kohlenstoff modifizierten Titandioxids ist.

7. Pflasterstein nach einem der Ansprüche 1 bis 6, **dadurch gekennzeichnet, dass** der Pflasterstein (1) an zumindest einer seiner an die Nutzoberfläche (4) grenzenden Seitenflächen (6) einen Überstand (5) aufweist.

8. Pflasterstein nach Anspruch 7, **dadurch gekennzeichnet, dass** der Überstand (5) einen Anteil von weniger als einem Drittel in der Höhe des Pflastersteins (1) ausmacht.

9. Oberflächenbefestigung, aufgebaut aus einer Vielzahl verlegter Pflastersteine (1) und zwischen den Pflastersteinen (1) befindlicher Fugen (11), **dadurch gekennzeichnet, dass** die Pflastersteine (1) nach einem der Ansprüche 1 bis 8 ausgebildet sind und die zwischen den Pflastersteinen (1) befindlichen Fugen (11) zum Ermöglichen eines Versickerns von abfließenden Oberflächenwasser innerhalb der Oberflächenbefestigung wasserdurchlässig sind.

10. Oberflächenbefestigung nach Anspruch 9, **dadurch gekennzeichnet, dass** die Fugen (11) mit einem Fugenfüllmaterial (12) verfüllt sind und die Wasserdurchlässigkeit des Fugenfüllmaterials (12) durch ihre Porosität und/oder ihre Breite an die von dem oder den angrenzenden Pflastersteinen (1) zu erwartende Menge abzuflieβenden Wassers angepasst ist.

11. Oberflächenbefestigung nach Anspruch 9 oder 10, **dadurch gekennzeichnet, dass** das Fugenfüllmaterial (12) zumindest in einem oberflächennahen Randbereich einen photokatalytischen Stoff oder ein photokatalytisches Stoffgemisch enthält.

12. Oberflächenbefestigung nach Anspruch 11, **dadurch gekennzeichnet, dass** der in das Fugenfüllmaterial (12) eingebaute photokatalytische Stoff ein im sichtbaren Licht aktiver Photokatalysator auf der Basis eines mit Kohlenstoff modifizierten Titandioxids ist oder das photokatalytische Stoffgemisch einen solchen Photokatalysator enthält.

13. Oberflächenbefestigung nach einem der Ansprüche 10 bis 12, **dadurch gekennzeichnet, dass** die Pflastersteine (1) einen Überstand (5) nach Anspruch 6 oder 7 aufweisen und die Fugen (11) auf den Bereich der Höhe der Überstände (5) der Pflastersteine (1) beschränkt mit Fugenfüllmaterial (12) verfüllt sind, während im Übrigen die Pflastersteine (1) in eine aus Schüttgut bestehende Bettung (B) eingesetzt sind, wobei die Wasserdurchlässigkeit der Bettung (B) größer ist als die Wasserdurchlässigkeit des abgebundenen Fugenfüllmaterials (12).

## Claims

1. A paving stone, comprising a supporting body (2) and a covering layer (3) of a binder-bound filler disposed thereon, the outside of which forms the usable surface (4) of the paving stone (1), which covering layer (3) contains a photocatalytic material or a photocatalytic mixture of materials for decomposing contamination on the usable surface (4), **characterised in that** the binder of the covering layer (3) is made impermeable to liquids by the incorporation of nanoparticles at least in its boundary region close to the usable surface and that at least a portion of the nanoparticles consists of the photocatalytic material or the photocatalytic mixture of materials.

2. The paving stone according to claim 1, **characterised in that** the nanoparticles used for sealing the covering layer (3) all consist of the photocatalytic material or mixture of materials.

3. The paving stone according to any one of claims 1 or 2, **characterised in that** with regard to its composition, the covering layer (3) is composed so as to be homogeneous across the thickness thereof.

4. The paving stone according to any one of claims 1 or 2, **characterised in that** the covering layer comprises a filler portion at its usable surface which is reduced in relation to the binder containing the photocatalytic material or the photocatalytic mixture of materials.

5. The paving stone according to any one of claims 1 to 4, **characterised in that** the filler of the covering layer is fine sand having a maximum grain size of 0.2 mm, in particular of 0.15 mm maximum.

6. The paving stone according to any one of claims 1 to 5, **characterised in that** the photocatalytic material incorporated in the covering layer (3) is a photocatalyst active in visible light on the basis of a carbon-modified titanium dioxide.

7. The paving stone according to any one of claims 1 to 6, **characterised in that** the paving stone (1) comprises a protrusion (5) on at least one of the lateral surfaces (6) thereof which borders the usable surface (4).

8. The paving stone according to claim 7, **characterised in that** the protrusion (5) is a percentage of less than one third of the height of the paving stone (1).

9. A surface attachment which is built up from a plurality of placed paving stones (1) and of joints (11) located between the paving stones (1), **characterised in that** the paving stones (1) are formed according to any one of claims 1 to 8 and the joints (11) located between the paving stones (1) are water permeable to enable surface water flowing off to percolate within the surface attachment.

10. The surface attachment according to claim 9, **characterised in that** the joints (11) are filled by a joint filler (12) and the water permeability of the joint filler (12) is adapted to the amount of run-off water to be expected from the adjoining paving stone(s) (1) by the porosity and/or the width of the joints.

11. The surface attachment according to claim 9 or 10, **characterised in that** the joint filler (12) contains a photocatalytic material or a photocatalytic mixture of materials at least in a boundary region close to the surface.

12. The surface attachment according to claim 11, **characterised in that** the photocatalytic material incorporated in the joint filler (12) is a photocatalyst active in visible light on the basis of a carbon-modified titanium dioxide or that the photocatalytic mixture of materials contains such photocatalyst.

13. The surface attachment according to any one of claims 10 to 12, **characterised in that** the paving stones (1) comprise a protrusion (5) according to claim 6 or 7 and that the joints (11) are filled with joint filler (12) in a manner limited to the region of the height of the protrusions (5) of the paving stones (1) while incidentally the paving stones (1) are placed in an embedding (B) consisting of bulk material, the water permeability of the embedding (B) being higher than the water permeability of the set joint filler (12).

## Revendications

1. Pavé comprenant un élément porteur (2) et une couche de recouvrement (3) disposée sur ce dernier et constituée d'un matériau de remplissage lié par du liant, dont la face extérieure constitue la surface utile (4) du pavé (1), laquelle couche de recouvrement (3) contient un matériau photocatalytique ou un mélange photocatalytique de matériaux destiné à décomposer les saletés se trouvant sur la surface utile (4), **caractérisé en ce que** le liant de la couche de recouvrement (3) est conformé de façon étanche, au moins dans la zone périphérique proche de le surface utile, par l'inclusion de nanoparticules et qu'au moins une partie des nanoparticules est constituée du matériau photocatalytique ou du mélange photocatalytique de matériaux.

2. Pavé selon la revendication 1 **caractérisé en ce que** les nanoparticules utilisées pour réaliser l'étanchéité de la couche de recouvrement (3) sont intégralement constituées d'un matériau photocatalytique ou d'un mélange de matériaux.

3. Pavé selon l'une des revendications 1 ou 2 **caractérisé en ce que** la couche de couverture (3) est composée de façon homogène en ce qui concerne la composition, sur toute son épaisseur.

4. Pavé selon l'une des revendications 1 ou 2 **caractérisé en ce que** la couche de recouvrement présente sur sa surface utile une proportion de matériau de remplissage réduite par rapport au liant contenu dans le matériau photocatalytique ou dans le mélange photocatalytique de matériaux.

5. Pavé selon l'une des revendications 1 à 4 **caractérisé en ce que** le matériau de remplissage de la couche de recouvrement est du sable fin d'une granulométrie maximale de 0,2 mm, plus particulièrement de 0,15 mm maximum.

6. Pavé selon l'une des revendications 1 à 5 **caractérisé en ce que** le matériau photocatalytique intégré dans la couche de recouvrement (3) est un photocatalysateur actif dans la lumière visible à base de dioxyde de titane modifié avec du carbone.

7. Pavé selon l'une des revendications 1 à 6 **caractérisé en ce que** le pavé (1) présente un débord (5) sur au moins une de ses faces latérales (6) avoisinant la surface utile (4).

8. Pavé selon la revendication 7 **caractérisé en ce que** le débord (5) représente une part inférieure à un tiers de la hauteur du pavé (1).

9. Pavage constitué d'une multitude de pavés (1) posés et de joints (11) se trouvant entre les pavés (1) **caractérisé en ce que** les pavés (1) sont conformés selon l'une des revendications 1 à 8 et que les joints (11) se trouvant entre les pavés (1) sont perméables à l'eau afin de permettre l'infiltration des eaux de ruissellement dans le pavage.

10. Pavage selon la revendication 9 **caractérisé en ce que** les joints (11) sont remplis d'un matériau de remplissage (12) de joints et que la perméabilité du matériau de remplissage (12) de joints correspond, par sa porosité et/ou sa largeur, à la quantité d'eau prévisible qui ruisselle sur le ou les pavés (1) voisins.

11. Pavage selon la revendication 9 ou 10 **caractérisé en ce que** le matériau de remplissage (12) de joints contient au moins dans une zone périphérique proche de la surface, un matériau photocatalytique ou un mélange photocatalytique de matériaux.

12. Pavage selon la revendication 11 **caractérisé en ce que** le matériau photocatalytique intégré au matériau de remplissage (12) de joints est un photocatalysateur actif dans la lumière visible à base de dioxyde de titane modifié avec du carbone ou que le mélange photocatalytique de matériaux contient un tel photocatalysateur.

13. Pavage selon l'une des revendications 10 à 12 **caractérisé en ce que** les pavés (1) présentent un débord (5) selon la revendication 6 ou 7 et que les joints (11) dans la zone à la hauteur du débord (5) des pavés (1) sont remplis de façon limitée avec du matériau de remplissage (12) de joints tandis que par ailleurs les pavés (1) sont posés sur un lit (B) constitué de graviers, la perméabilité du lit (B) étant supérieure à la perméabilité du matériau lié de remplissage (12) de joints.
